**Europäisches Patentamt**

**European Patent Office**

**Office européen des brevets**

(11) Veröffentlichungsnummer: **0 291 887**

**A2**

## (12) EUROPÄISCHE PATENTANMELDUNG

(21) Anmeldenummer: **88107760.6**

(51) Int. Cl.⁴: **B60T 8/68**

(22) Anmeldetag: **13.05.88**

(30) Priorität: **20.05.87 AU 2247/87**

(43) Veröffentlichungstag der Anmeldung:
**23.11.88 Patentblatt 88/47**

(84) Benannte Vertragsstaaten:
**AT DE FR GB**

(71) Anmelder: **Csepel Autogyár**
**Pf. 38**
**H-2311 Szigetszentmiklos(HU)**

(72) Erfinder: **Simonyi, Sandor, Dr.**
**H-3102 Salgótarján**
**Petöfi u. 59(HU)**
Erfinder: **Töröcsik, Lázló**
**H-1126 Budapest**
**Kakukk u. 10/b(HU)**
Erfinder: **Toth, István**
**H-3100 Salgórarján**
**Kistarján u.8(HU)**
Erfinder: **Válóczi, György**
**H-3104 Salgótarján**
**Budapersti u.40(HU)**

(74) Vertreter: **Patentanwälte Viering & Jentschura**
**Steinsdorfstrasse 6**
**D-8000 München 22(DE)**

(54) Verfahren zum Steuern einer hydrodynamischen Verzögerungsbremse eines Kraftfahrzeugs.

(57) Verfahren zum Steuern einer hydrodynamischen Verzögerungsbremse eines Kraftfahrzeugs, welches einen aus einem Verbrennungsmotor 1, einem von diesem über eine Kupplung angetriebenen Wechselgetriebe 2, einem daran unmittelbar oder über eine Kardanwelle 4 angeschlossenen Differentialwerk 5, einem daran angeschlossenen Paar Halbwellen 6 und daran angeordneten Rädern 7 bestehenden Antriebsstrang aufweist. Zum geschwindigkeitshaltenden Regeln der Verzögerungsbremse (3) wird aus der Drehzahl eines Bauteiles oder der durchschnittlichen Drehzahl eines Bauteilpaares des mit der Abtriebswelle des Wechselgetriebes (2) beginnenden und mit den Rädern (7) endenden Teils des Antriebsstranges fortlaufenden ein elektrisches Winkelgeschwindigkeitssignal erzeugt und das momentane Winkelgeschwindigkeitssignal wird mit Hilfe eines durch das "Grundgassignal" des Gaspedalgrundstellungssignalgebers oder durch das Bremssignal des die verschiedenen Positionen des Bremspedals signalisierenden Bremspedalstellungs-signalgebers erzeugten Befehls gespeichert. Mittels des "Grundgassignals" oder des Bremssignals wird dem elektrohydraulischen Ventilsyystem (13) der hydrodynamischen Verzögerungsbremse (3) ein Steuersignal zugeführt, worauf das vom Winkelgeschwindigkeitssignalgeber (16) fortlaufend weitergeleitete Winkelgeschwindigkeitssignal fortlaufend mit dem gespeicherten Winkelgeschwindigkeitssignal verglichen wird und das Steuersignal beim Auftreten einer Abweichung zwischen den beiden Winkelgeschwindigkeitssignalen derart verändert wird, daß der Wert des momentanen Winkelgeschwindigkeitssignals in Richtung zu dem Wert des gespeicherten Winkelgeschwindigkeitssignals zurückgeführt wird.

Fig.1

## Verfahren zum Steuern einer hydrodynamischen Verzögerungsbremse eines Kraftfahrzeugs

Die Erfindung bezieht sich auf ein Verfahren, mit dem die bei Straßenkraftfahrzeugen verwendete hydrodynamische Verzögerungsbremse (Retarder) geschwindigkeitshaltend elektrohydraulisch gesteuert werden kann. Es ist bekannt, daß das dauerhafte Bremsen mit hoher thermischer Belastung des Bremssystems verbunden ist. Aus diesem Grund wird insbesondere bei Schwerkraftfahrzeugen und Autobussen eine hydrodynamische Verzögerungsbremse zwecks Verminderung der Belastung des traditionellen Bremssystems verwendet. Bei den einfacheren Lösungen funktioniert die hydrodynamische Verzögerungsbremse parallel zu der traditionellen Bremse, dazu proportional. Hier wird die traditionelle Bremse durch die hydrodynamische Verzögerungsbremse beim dauerhaften Bremsen nur teilweise entlastet.

Es kommen solche Situationen vor, zum Beispiel beim Fahren auf einer längeren Gefällstrecke,bei denen das Bremsen nicht das vollständige Anhalten des Kraftfahrzeuges, sondern nur das Verhindern einer Beschleunigung, also das Halten der Geschwindigkeit auf einem konstanten Wert, herbeiführen soll. In diesen Fällen wäre die Wirkung der hydrodynamischen Verzögerungsbremse allein genügend. Wenn aber diese von der traditionellen Bremse unabhängig gemacht ist, muß für ihre gesonderte Steuerung gesorgt werden.

Für diesen Zweck wurden bisher verschiedene Steuerungsarten ausgearbeitet. Jede dieser Lösungen repräsentiert einen bestimmten Automatisierungsgrad, indem die hydrodynamische Verzögerungsbremse in Abhängigkeit von irgendeinem geeigneten Referenzwert geregelt ist.

Bei der Lösung nach der EP-A 0036 753 wird die Drehzahl des Motors gemessen und mit einem vorangehend eingegebenen zugelassenen Maximalwert verglichen. Bei Überschreitung dieses Wertes werden die hydrodynamischen Verzögerungsbremse über die Steuerung automatisch eingeschaltet und die Motordrehzahl in drei Stufen auf den Referenzwert eingeregelt. Nötigenfalls kann die Steuerung mittels eines Handschalters ausgeschaltet werden.

Aus der EP-A 0 145 374 ist eine solche Lösung bekannt, nach der die Motordrehzahl oder die Geschwindigkeit des Kraftfahrzeuges gemessen und mit dem entsprechenden Referenzwert verglichen wird. Dieser Wert kann entweder ein in der Steuerung vorangehend eingespeister konstanter Wert sein oder vom Fahrzeugfahrer eingestellt werden. Die hydrodynamische Verzögerungsbremse wird über die Steuerung bei einer Überschreitung des Referenzwertes automatisch eingeschaltet und entsprechend des Referenzwertes geregelt.

In der FR-A- 2 424 827 ist eine Lösung beschrieben, bei der das traditionelle Bremssystem des Kraftfahrzeuges mit einer blockierungsverhindernden Steuerung versehen ist; so wird auch die Raddrehzahl gemessen und deshalb wird hier die Geschwindigkeit des Kraftfahrzeuges mit dem Referenzwert verglichen. Der Referenzwert wird in Abhängigkeit von der Belastung und vom Gefällegrad vom Fahrzeugfahrer eingestellt; bei anderen Ausführungsformen wird er über entlang der Straße angeordnete Funksender an die Steuereinrichtung übermittelt. Diese Lösung wurde zwecks Verwendung in breiterem Kreis entwickelt, so zum Beispiel ist sie auch zur Steuerung einer Auspuffbremse, einer elektrischen sog. Foucault-Bremse geeignet.

In der GB-A-2 057 611 ist eine Lösung beschrieben, die ebenfalls für mit einem Antiblockier-Bremssystem versehene Kraftfahrzeuge ausgebildet wurde. Die blockierungsverhindernde Steuerung wirkt auch auf die hydrodynamische Verzögerungsbremse, wenn der Fahrzeugfahrer diese einschaltet. Zur geschwindigkeitshalten Steuerung muß der Referenzwert vom Fahrzeugfahrer - eventuell fortlaufend - geregelt werden.

Als vom Fahrzeugfahrer am wenigsten abhängig kann diejenige Steuerung betrachtet werden, die in der GB-A- 1 382 439 beschrieben ist. Die hydrodynamische Verzögerungsbremse schaltet sich in der Grundstellung des Gaspedals ein und kann mit dem Bremspedal derart betätigt werden, daß zuerst die hydrodynamische Verzögerungsbremse wirksam wird, wodurch die traditionelle Bremse verzögert anspricht. Die Wirksamkeit der hydrodynamischen Verzögerungsbremse muß in Abhängigkeit von der Fahrtgeschwindigkeit entweder vom Fahrzeugfahrer eingestellt werden oder kann in einer anderen Ausführungsform - theoretisch - über den Schlupf zwischen den beiden Seiten des hydrodynamischen Drehmomentwandlers geregelt werden.

Aus den hier angegebenen bekannten Lösungen ist es ersichtlich, daß man bisher nicht von einer wirklich geschwindigkeitshaltenden Steuerung reden konnte. Das Kraftfahrzeug erreicht die vorangehend eingespeisten Referenzwerte nur oberhalb des vorbestimmten Gefällegrades oder der Gefällelänge, also unterhalb der Grenzwerte besteht keine geschwindigkeitshaltende Steuerung. Wenn diese aber vom Fahrzeugfahrer geregelt werden soll, kann sie nicht mehr als automatisch geschwindigkeitshaltend betrachtet werden. Wenn die hydrodynamische Verzögerungsbremse zu dem traditionellen Bremssystem parallel funktioniert, ist dieses dadurch nur teilweise entlastet. Schließlich kann die Steuerung auch zum Überbremsen führen, zum Beispiel bei der oben zuletzt erwähnten Lösung.

Zielsetzung unserer Erfindung ist es, den Betrieb der hydrodynamischen Verzögerungsbemse vollständig automatisch geschwindigkeitshaltend zu machen. Dies kann erreicht werden, wenn die physisch ideale Geschwindigkeit in jedem Fall als Referenzgeschwindigkeit gewählt wird. Es ist offenbar, daß solange der Fahrzeugfahrer das Gaspedal gedrückt hält, er die Geschwindigkeit für entsprechend hält und auch nach Zurücknahme des Gaspedals für entsprechend hält, wenn er nicht zu bremsen beginnt. Aufgrund dessen ist die ideale Referenzgeschwindigkeit diejenige Geschwindigkeit, mit der das Kraftfahrzeug im Moment des Zurücknehmens des Gaspedals fährt. Dieser Wert soll also für eine Steuereinheit als Sollwert herangezogen werden und zwar derart, daß er in einer Speichereinheit gespeichert wird.

Mit ähnlicher Schlußfolgerung kann man einsehen, daß der Fahrzeugfahrer die im Moment des Zurücknehmens des Gaspedals bestehende Geschwindigkeit entweder sofort oder später für übermäßig halten kann; deshalb wird er bremsen. Er wird mit dem Bremsen aufhören, wenn er die Geschwindigkeit des Kraftfahrzeuges auf eine sichere Geschwindigkeit vermindert hat. Im weiteren soll also diese Geschwindigkeit als Referenzgeschwindigkeit behandelt werden.

Schließlich ist es zweckmäßig, zur geschwindigkeitshaltenden Steuerung diejenige Eigenschaft der hydrodynamischen Verzögerungsbremse zu beseitigen, daß sie, da sie relativ langsam aufgefüllt wird, nur langsam, verzögert wirksam wird. Dies kann dadurch erreicht werden, daß am Anfang des Betriebs beginns eine im Vergleich zum nötigen Bremsen unverhältnissmäßig rasche Auffüllung mittels vollständigen Öffnens des steuernden proportionalen Ventils, z.B. mit der Verwendung der PD-Regelung, sichergestellt wird.

Die Erfindung betrifft also ein Verfahren zum Betätigen einer mittels eines elektrohydraulischen Ventilsystems gesteuerten hydrodynamischen Verzögerungsbremse in einem Kraftfahrzeug, das einen aus einem Verbrennungsmotor, einem von diesem über eine Kupplung angetriebenen Wechselgetriebe, mindestens einem mittelbar oder gegebenenfalls über eine Kardanwelle angeschlossenen Differentialwerk, mindestens einem daran angeschlossenen Paar Halbwellen und daran angeordneten Rädern bestehenden Antriebsstrang aufweist. Nach dem erfindungsgemäßen Verfahren wird aus der Drehzahl irgendeines Konstruktionsteils oder aus der durchschnittlichen Drehzahl irgendeines Konstruktionsteilpaares des mit der Abtriebswelle des Wechselgetriebes beginnenden und mit den Rädern endenden Teils des Antriebsstranges mittels eines Winkelgeschwindigkeitssignalgebers fortlaufend ein elektrisches Winkelgeschwindigkeitssignal erzeugt und in eine Speichereinheit geführt. Das momentane Winkelgeschwindigkeitssignal wird aufgrund des durch das "Grundgas"-Signal eines Gaspedalgrundstellungssignalgebers oder das Bremssignal eines die unterschiedlichen Positionen des Bremspedals signalisierenden Bremspedalstellungssignalgebers gegebenen Befehls gespeichert. Aufgrund des "Grundgas"-Signals oder des Bremssignals wird dem elektrohydraulichen Ventilsystem der hydrodynamischen Verzögerungsbremse über eine Steuereinheit ein Steuersignal zugeführt und das von dem Winkelgeschwindigkeitssignalgeber fortlaufend erzeugte Winkelgeschwindigkeitssignal wird in der Steuereinheit fortlaufend mit dem in der Speichereinheit gespeicherten Winkelgeschwindigkeitssignal verglichen. Das Steuersignal der Steuereinheit wird durch Auftreten einer Abweichung zwischen den beiden Winkelgeschwindigkeitssignalen derart verändert, daß der Wert des momentanen Winkelgeschwindigkeitssignals in Richtung zu dem Wert des gespeicherten Winkelgeschwindigkeitssignal zurückgeführt wird.

Bei einer vorteilhaften Ausführungsform des erfindungsgemäßen Verfahrens wird das Steuersignal der Steuereinheit aus einem zu der Abweichung zwischen den Winkelgeschwindigkeitssignalen proportionalen Teil und einem zu dem ersten Differentialquotienten dieses Teils proportionalen Teil erzeugt.

Die Erfindung wird nachstehend anhand einer vorteilhaften Ausführungsform mit Hilfe der Zeichnung näher erläutert, ohne die Erfindung nur auf diese Form zu begrenzen. Es zeigt

Fig. 1 das Schema des Antriebsteiles, des Bremssystems und des Gaszuführsystems des als Beispiel dienenden Kraftfahrzeugs,

Fig. 2 das Schema der Steuerung der hydrodynamischen Verzögerungsbremse, und

Fig. 3 das Schema der an der Steuerung teilnehmenden elektronischen Einheit.

Die dargestellte erfindungsgemäße Vorrichtung wurde zur Steuerung der hydrodynamischen Verzögerungsbremse eines städtischen Autobusses realsiert.

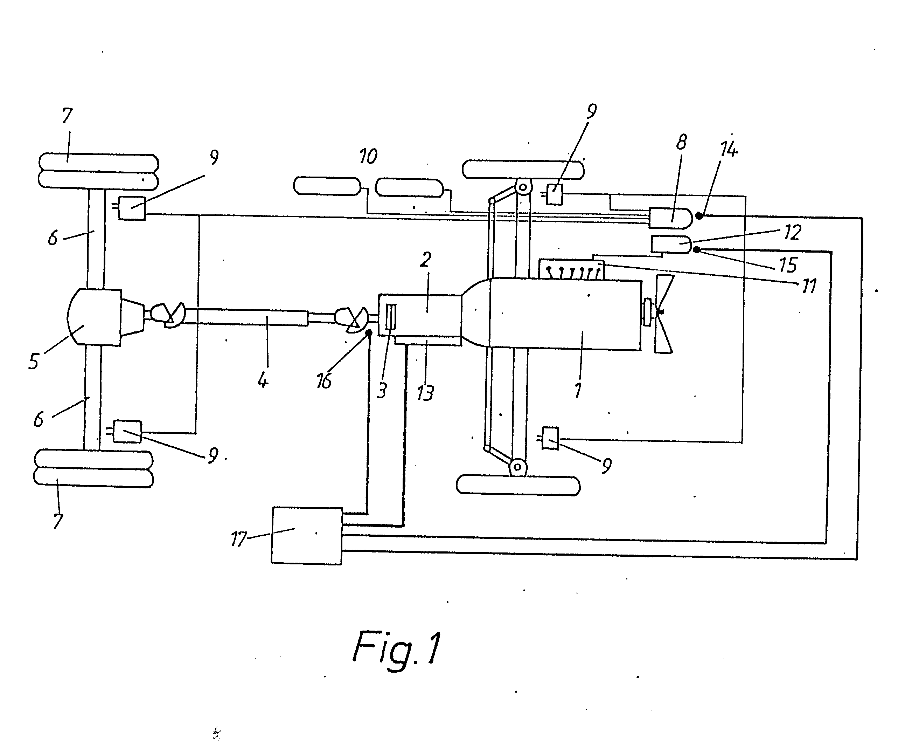

Der Autobus wird, wie aus Fig. 1 ersichtlich, von einem Motor 1 angetrieben, der ein Sechszylinder-Diesel-Verbrennungsmotor ist. Am Motor 1 ist ein automatisches Wechselgetriebe 2 angeschlossen, das in an sich bekannter Weise einen hydrodynamischen Drehmomentwandler und eine Reibkupplung enthält. Ebenfalls im automatischen Wechselgetriebe 2 ist eine hydrodynamische Verzögerungsbremse 3 mit elektromagnetischen Ventilen 13, so mit einem die hydrodynamische Verzögerungsbremse 3 regelnden proportionalen Ventil gemeinsam eingebaut.

Die Ausgangswelle des automatischen Wechselgetriebes ist über eine Kardanwelle 4 mit einem Differentialwerk 5 der Hinterachse verbunden, das über Halbwellen 6 mit den Rädern 7 gekuppelt ist. Von der oben beschriebenen Einheit wird der Antriebsstrang des Autobusses gebildet.

Es soll bemerkt werden, daß die Erfindung auch bei Personenkraftwagen verwendbar ist. Bei einem Teil der Personenkraftwagen, nämlich bei Wagen mit Frontantrieb und mit Heckmotor, sind aber das Wechselgetriebe und das Differentialwerk zu einer Einheit zusammengebaut, so daß sich in deren Antriebsstrang keine Kardanwelle befindet.

In Figur 1 ist auch das Bremssystem des Autobusses dargestellt. Dieses Zweikreis-Bremssystem besteht aus einem mit Bremspedal 8 betätigten Bremsventil, die Bremsen betätigenden Bremszylindern 9 und einer diese verbindenden Bremskraftübertragungskonstruktion 10, die die nicht gesondert erwähnten Rohrleitungen, Ventile, Luftbehälter und den diese mit Druckluft versorgenden Kompressor enthält.

Die Kraftstoffversorgung des Motors 1 wird in aus Figur 1 ersichtlicher Weise über das Zuführungssystem 11 bewerkstelligt, das mit dem Gaspedal 12 geregelt werden kann.

Zur Steuerung der hydrodynamischen Verzögerungsbremse 3 sind Grundinformationen nötig, die mit entsprechenden Signalgebern erzeugt werden.

Eine der Grundinformationen ist die momentane Geschwindigkeit des Kraftfahrzeugs, beziehungsweise deren Änderung. Wenn das Kraftfahrzeug auch mit einem Antiblockier-Bremssystem versehen ist, entspricht das Signal der bei den Rädern angeordneten Winkelgeschwindigkeitssignalgeber, beziehungsweise das davon abgeleitete Mittelwertsignals der Zielsetzung der Erfindung. Bei nicht mit einem Antiblockier-Bremssystem versehenen Kraftfahrzeugen kann die Aufgabe auch auf einfachere Weise gelöst werden, denn jedes Wechselgetriebe verfügt über einen Kilometerzähler-Ausgang, von dem dieses Signal abgenommen werden kann. Dementsprechend wurde der Winkelgeschwindigkeitssignalgeber 16 bei der Abtriebswelle des automatischen Wechselgetriebes 2 eingebaut.

Weitere Grundinformationen sind die den Willen des Fahrzeugfahrers im Zusammenhang mit der Geschwindigkeit des Kraftfahrzeugs ausdrückende Gaspedalstellung und Bremspedalstellung. Aus diesem Grund wurden beim Bremspedal 8 ein die verschiedenen Positionen des Bremspedals signalisierender Bremspedalstellungssignalgeber 14, und beim Gaspedal 12 ein Gaspedalgrundstellungssignalgeber 15 eingebaut.

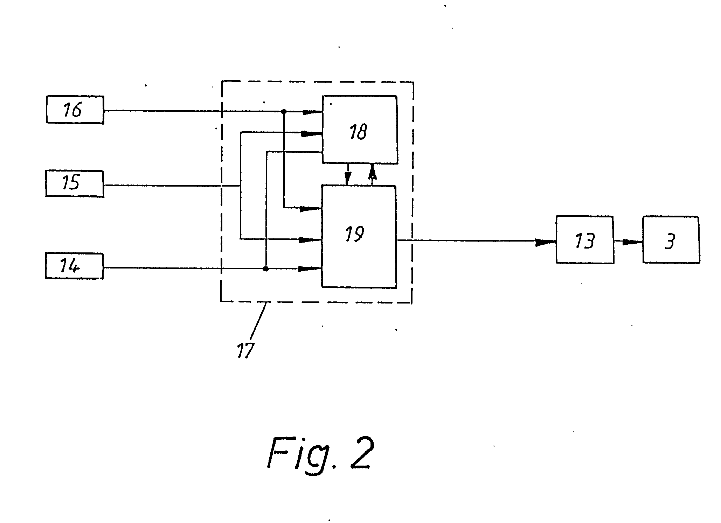

Alle drei Signalgeber 14, 15, 16 sind am Eingang einer elektronischen Einheit 17 angeschlossen. Die elektronische Einheit 17 besteht (Fig. 2) aus einer Speichereinheit 18 und aus einer damit verbundenen Steuereinheit 19. Die Signalgeber 14, 15, 16 sind sowohl an der Speichereinheit 18 als auch an der Steuereinheit 19 angeschlossen. Der Ausgang der Steuereinheit 19, der zugleich der Ausgang der elektrischen Einheit 17 ist, ist mit den entsprechenden Elektromagneten der elektromagnetischen Ventile 13 verbunden (Fig.1).

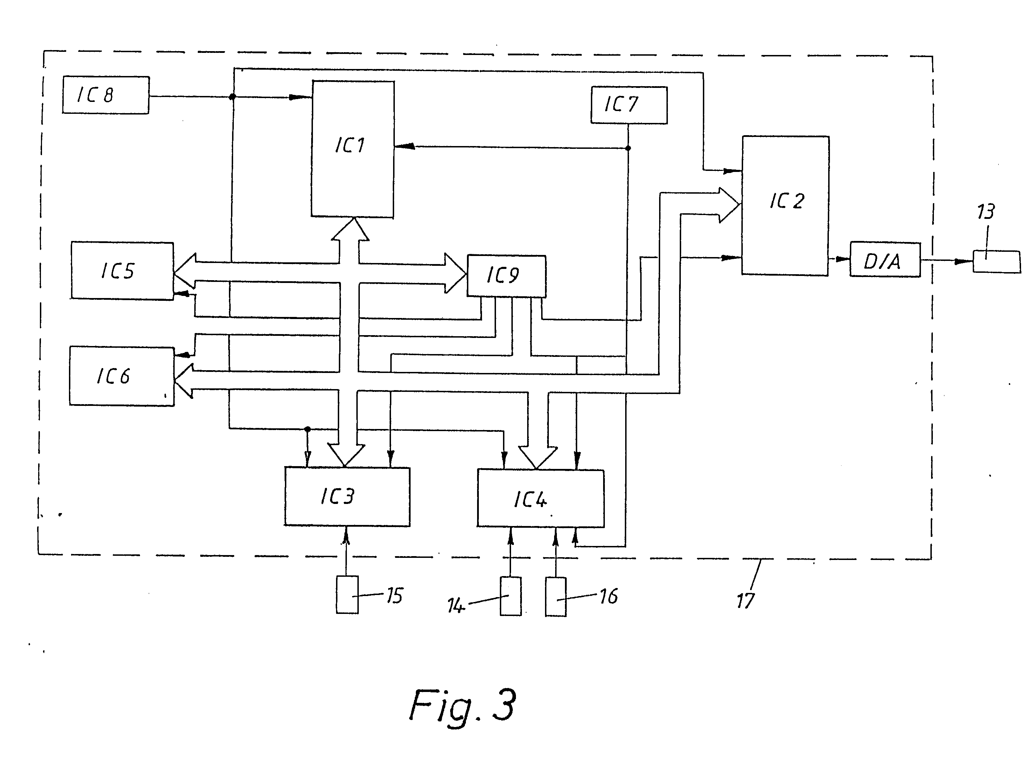

Die elektronische Einheit 17 kann in zahlreichen Varianten aufgebaut werden. Eine mögliche Variante ist in Figur 3 dargestellt. Die elektronischen Elemente sind nachstehend mit den Benennungen laut des IC-Katalogs des Technischen Verlags, Berlin, bezeichnet.

Die in Figur 3 dargestellte elektronische Einheit 17 besteht aus dem Mikroprozessor IC 1 (Z80A), der programmierbaren Input-Output-Einheit IC 2 (8255), programmierbaren Dreikanal-Zähl- und -zeitregeleinheiten IC3 und IC4 (8253), der RAM-Einheit IC5 (4016), der ROM-Einheit IC6 (2732), dem Taktgenerator IC7 (7434), der Reset-Einheit IC8 (74 LS 132), der Dekoder-Einheit IC9 (74 LS 138) und der Digital/Analog-Einheit D/A.

Die die gleiche Funktion erfüllenden Adressen-, Daten- und Steuerungsanschlußpunkte des Mikroprozessors IC1, der programmierbaren Input-Output-Einheit IC2, den programmierbaren Dreikanal-Zähl- und -zeitreglereinheiten IC3 und IC4, der RAM-Einheit IC5, der ROM-Einheit IC6 und der Dekoder-Einheit IC9 sind miteinander verbunden.

Die Reset-Einheit IC8 ist mit dem "reset"-Punkt des Mikroprozessors IC1, der programmierbaren Input-Output-Einheit IC2 und den programmierbaren Dreikanal-Zähl- und -zeitreglereinheiten IC3 und IC4 verbunden.

Die Ausgänge der Dekoder-Einheit IC9 sind einzeln mit den chip-select-Eingängen der programmierbaren Input-Output-Einheit IC2, den programmierbaren Dreikanal- Zähl- und zeitreglereinheiten IC3 und IC4, der RAM-Einheit IC5 und der ROM-Einheit IC6 verbunden.

Der Taktgenerator IC7 ist mit dem Takteingang des Mikroprozessors IC1 und der Dreikanal-Zähl- und zeitreglereinheit IC4 verbunden.

Mit dem Ausgang der programmierbaren Input-Output-Einheit IC2 sind die Eingänge der Digital/Analog-Einheit D/A verbunden.

Aus dem Vergleich der Figuren 2 und 3 ist es ersichtlich, daß die in Figur 2 funktionell aufgeteilten beiden Teile der elektronischen Einheit 17, das heißt die tatsächlichen Bauteile der Speichereinheit 18, der Steuereinheit 19 und der elektronischen Einheit 17, aus dem Gesichtspunkt der Verbindungen einander nicht genau decken. Die Erklärung hierfür liegt darin, daß die elektronische Steuereinheit 17 mit auf die einzelnen Aufgaben spezialisierten elektronischen Elementen einfacher aufgebaut werden kann, weiterhin daß diese elektronische Steuereinheit 17 auch andere, von der Erfindung nicht berührte Aufgaben erfüllt (Antiblockier-Steuerung der hydrodynamischen Verzögerungsbremse, Steuerung des automatischen Wechselgetriebes).

Die elektronische Einheit 17 ist über den Eingang der programmierbaren Dreikanal-Zähl- und -zeitreglereinheit IC3 mit dem Gaspedalgrundstellungssignalgeber 15, und über die Eingänge der programmierbaren Dreikanal-Zähl- und -zeitreglereinheit IC4 mit dem Bremspedalstellungssignalgeber 14 und dem Winkelgeschwindigkeitssignalgeber 16 verbunden.

Der Ausgang der Digital/Analog-Einheit D/A ist zugleich der Ausgang der elektronischen Einheit 17 und der Eingang des elektromagnetischen Ventils 13 zur Steuerung der hydrodynamischen Verzögerungsbremse. Die Digital/Analog-Einheit D/A erzeugt ein Signal einer Größe von 0-10 V, das von der eigenen Steuerelektronik des die hydrodynamische Verzögerungsbremse 3 regelnden Proportionalventils auf eine derartige Spannung weitergeregelt wird, welche das Proportionalventil in einem Druckbereich von 0-1 MPa regelt.

Das erfindungsgemäße Verfahren wird wie folgt durchgeführt.

Solange der Autobus so fährt, daß der Fahrzeugfahrer das Gaspedal 12 niederdrückt, funktioniert die hydrodynamische Verzögerungsbremse 3 überhaupt nicht. Der Winkelgeschwindigkeitssignalgeber 16 signalisiert zwar fortlaufend die Geschwindigkeit des Autobusses, aber die elektronische Einheit 17 verarbeitet diese Signal nicht.

Wenn der Fahrzeugfahrer das Gaspedal 12 in seine Grundstellung zurückläßt, speichert die Speichereinheit 18, der die RAM-Einheit IC5 entspricht, auf Wirkung des "Grundgassignals" des Gaspedalgrundstellungssignalgebers 15 denjenigen Geschwindigkeitswert, den der Winkelgeschwindigkeitssignalgeber 16 beim Zurückstellen des Gaspedals 12 in seine Grundstellung als Winkelgeschwindigkeitssignal abgegeben hat.

Gleichzeitig damit gibt das "Grundgassignal" des Gaspedalgrundstellungssignalgebers 15 der Steuereinheit 19 einen Befehl zur Betätigung der hydrodynamischen Verzögerungsbremse 3. Von nun an wird in der Steuereinheit 19 der in der Speichereinheit 18 gespeicherte Geschwindigkeitswert mit dem von dem Winkelschwindigkeitssignalgeber 16 als Winkelgeschwindigkeitssignal fortlaufend abgegebenen momentanen Geschwindigkeitswert fortlaufend verglichen. Nur auf Wirkung des "Grundgassignals" des Gaspedalgrundstellungssignalgebers 15 gibt aber die Steuereinheit 19 dem elektromagnetischen Ventilsystem noch kein Steuersignal.

Wenn der Autobus auf einer Gefällstrecke fährt, kann er sich trotz der Gasabnahme beschleunigen. Wenn dies erfolgt, wird die Größe des von dem Winkelgeschwindigkeitssignalgeber 16 abgegebenen Winkelgeschwindigkeitssignals, das heißt der momentane Geschwindigkeitswert, größer als die des gespeicherten Geschwindigkeitswertes.

Wenn dies der Fall ist, gibt die Steuereinheit den elektromagnetischen Ventilen 13 ein zu der Abweichung proportionales Steuersignal und das Proportionalventil betätigt die hydrodynamische Verzögerungsbremse 3 in einem zur Verlangsamung auf den gespeicherten Geschwindigkeitswert erforderlichen Maße. Diese automische Regelung setzt sich solange fort, wie die Steuereinheit 19 aus dem Winkelgeschwindigkeitssignal des Winkelgeschwindigkeitssignalgebers 16 darauf folgern kann, daß der Autobus sich ohne Betätigung der hydrodynamischen Verzögerungsbremse 3 beschleunigen würde, das heißt die Regelung ist geschwindigkeitshaltend.

Wenn der Fahrzeugfahrer den den vorangehenden entsprechend gespeicherten Geschwindigkeitswert als zu hoch betrachtet, verlangsamt er den Autobus mittels Niederdrückens des Bremspedals 8 auf die als sicher betrachtete Geschwindigkeit. Die hydrodynamische Verzögerungsbremse 3 nimmt ebenfalls daran teil.

Der Bremspedalstellungssignalgeber 14 führt der Steuereinheit 19 ein zu der Stellung des Bremspedals 8 proportionales Bremssignal zu und die Steuereinheit 19 gibt dem Proportionalventil der elektromagnetischen Ventile 13 ein da zu proportionales Steuersignal. Dadurch wird von der hydrodynamischen Verzögerungsbremse 3 eine zu der von den Bremszylindern 9 erzeugten Bremskraft proportionale Bremswirkung ausgeübt.

Gleichzeitig damit löscht das Bremssignal den in der Speichereinheit 18 gespeicherten Geschwindigkeitswert.

Wenn der Autobus im erforderlichen Maße verlangsamt wurde, läßt der Fahrzeugfahrer das Bremspedal 8 los, und das Bremssignal wird gelöscht. Wenn das Gaspedal 12 nach wie vor in seiner Grundstellung bleibt, speichert die Speichereinheit 18 auf Wirkung des Signals des Gaspedalgrundstellungssignalgebers 15 jetzt das der im Moment des Loslassens des Bremspedals 8 gemessenen Geschwindigkeit entsprechende Winkelgeschwindigkeitssignal des Winkelgeschwindigkeitssignalgebers 16. Im weiteren vergleicht die Steuereinheit 19 das der momentanen Geschwindigkeit entsprechende Winkelgeschwindigkeitssignal mit dem neugespeicherten Winkelgeschwindigkeitssignal. Die geschwindigkeitshaltende Regelung der hydrodynamischen Verzögerungsbremse 3 stimmt mit oben Beschriebenem überein.

Die Steuerungsbereitschaft der Steuereinheit 19 kann auf zwei Wegen aufgehoben werden.

Wenn der Fahrzeugfahrer beginnt, den Autobus zu beschleunigen, drückt er das Gaspedal 12 nieder. Dadurch wird das "Grundsignal" des Gaspedalgrundstellungssignalgebers 15 gelöscht. Infolgedessen wird in der Speichereinheit 18 das gespeicherte Winkelgeschwindigkeitssignal gelöscht und auch das den elektromagnetischen Ventilen 13 zuzuführende Steuersignal der Steuereinheit 19 verschwindet.

In einem anderen Fall verlangsamt sich der Autobus dauerhaft bis unter den gespeicherten Geschwindigkeitswert, und diese Verlangsamung kann über die Steuereinheit 19 nicht einmal mittels vollständigen Lösens der hydrodynamischen Verzögerungsbremse 3 beseitigt werden. In diesem Fall wird das gespeicherte Signal in der Speichereinheit 18 von der Steuereinheit 19 gelöscht.

Im folgenden werden zwei weitere Durchführungsmöglichkeiten des erfindungsgemäßen Verfahrens erläutert. Da in diesen Beispielen Abweichungen nur darin bestehen, daß weniger Signalgeber verwendet werden, können diese Varianten aufgrund der zum vorangehenden Beispiel gehörenden Figuren ohne weiteres verstanden werden.

Bei der einen Variante wird kein Bremspedalstellunssignalgeber verwendet. Hier wird das Verfahren wie folgt durchgeführt.

Die Speichereinheit 18 speichert den momentanen Winkelgeschwindigkeitswert des Winkelgeschwindigkeitssignalgebers 16 auf Wirkung des "Grundgassignals" des Gaspedalgrundstellungssignalgebers 15, und das Einschalten und geschwindigkeithatenden Regeln der hydrodynamischen Verzögerungsbremse 3 werden von der Steuereinheit 19 in der oben hierzu beschriebenen Weise durchgeführt.

Wenn der Fahrzeugfahrer das Halten einer gegenüber dem gespeicherten Geschwindigkeitswert niederigeren Geschwindigkeit erreichen will, verlangsamt er den Autobus mittels des Bremspedals 8 auf diese Geschwindigkeit und bewegt dann das Gaspedal 12 für einen Augenblick aus seiner Grundstellung und läßt das Gaspedal wieder los. Daher wird das in der Speichereinheit 18 gespeicherte Winkelgeschwindigkeitssignal aufgrund der Betätigung des Gas pedals 12 gelöscht, wonach in der Speichereinheit 18 das aufgrund des Zurückstellens des Gaspedals 12 in dessen Grundstellung das durch das Bremsen des Fahrzeugs erhaltene niedrigere Winkelgeschwindigkeitssignal gespeichert wird. Im weiteren vergleicht die Steuereinheit 19 das der momentanen Geschwindigkeit entsprechende Winkelgeschwindigkeitssignal mit dem neu gespeicherten niedrigeren Winkelgeschwindigkeitssignal.

Die Steuerungsbereitschaft der Steuereinheit 19 und die Speichereinheit 18 können in der oben beschriebenen Weise gelöscht werden.

Bei der anderen Variante ist im System kein Gaspedalgrundstellungssignalgeber vorgesehen. Das Verfahren wird wie folgt durchgeführt.

Der Fahrzeugfahrer gibt einen Befehl zum Speichern des Winkelgeschwindigkeitssignals des Winkelgeschwindigkeitssignalgebers 16 mittels kurzen Betätigens des Bremspedals 8. Jetzt gibt der Bremspedalstellungssignalgeber 14 an die Speichereinheit 18 ein Signal zum Speichern des der momentanen Geschwindigkeit entsprechenden Winkelgeschwindigkeitssignals für die Steuereinheit 19 zur geschwindigkeitshaltenden Regelung der hydrodynamischen Verzögerungsbremse 3. Die Regelung erfolgt wie oben beschrieben.

Zum geschwindigkeitshaltenden Fahren auf einer niedrigen Geschwindigkeitshöhe verlangsamt der Fahrzeugfahrer das Kraftfahrzeug mittels entsprechenden Niederdrückens des Bremspedals 8 in der bereits beschriebenen Weise und hebt damit gleichzeitig die geschwindigkeitshaltende Regelung der hydrodynamischen Verzögerungsbremse 3 auf. Danach beginnt durch Loslassen und erneutes Niederdücken des Bremspedals 8 der beschriebene Vorgang erneut, das heißt, aufgrund des erneuten Niederdrückens des Bremspedals 8 gibt der Bremspedalstellungssignalgeber 14 ein Signal an die Speichereinheit 18 zum Speichern des der momentanen Geschwindigkeit entsprechenden Winkelgeschwindigkeitssignals, und an die Steuereinheit zur geschwindigkeitshaltenden Regelung des hydrodynamischen Verzögerungsbremse 3. Die Regelung erfolgt wie oben beschrieben.

Zum geschwindigkeitshaltenden Fahren mit einer niedrigeren Geschwindigkeit verlangsamt der Fahrzeugfahrer das Kraftfahrzeug mittels entsprechenden Betätigens des Bremspedals 8 in der bereits beschriebenen Weise und löst damit gleichzeitig die geschwindigkeitshaltende Regelung der hydrodynamischen Verzögerungsbremse 3. Danach beginnt der bereits beschriebene Vorgang durch Loslassen und erneutes Niederdrücken des Bremspedals 8 von Neuem, das heißt auf Wirkung des erneuten Niederdrückens des Bremspedals 8 gibt der Bremspedalstellungssignalgeber 14 ein Signal an die Speichereinheit 18 zum Speichern des der momentanen Geschwindigkeit entsprechenden Winkelgeschwindigkeitssignals, und an die Steuereinheit 19 zur geschwindigkeitshaltenden Regelung der hydrodynamischen Verzögerungsbremse 3. Danach kann das Bremspedal 8 wieder losgelassen werden.

Ein anderer Weg zum Löschen der Steuerungsbereitschaft der Steuereinheit 19 und der Speichereinheit 18 besteht in dem automatischen Abschalten aufgrund der bereits beschriebenen Überverlangsamung des Fahrzeugs. Wieder ein anderer Weg besteht darin, daß wenn der Fahrzeugfahrer den Autobus beschleunigen will, das Systemn mit dem kurzzeitigen Niederdrücken des Bremspedals 8 ausgeschaltet wird.

Es ist ersichtlich, daß das traditionelle Bremsystem mit der Verwendung der erfindungsgemäßen Lösung bei geschwindigkeitshaltender Regelung solange entlastet werden kann, wie die Wirkung der hydrodynamischen Verzögerungsbremse allein zum wirksamen Bremsen ausreicht.

Wie bereits anfangs erwähnt, haben die hydrodynamischen Verzögerungsbremsen diejenige nachteilige Eigenschaft, daß sie auf die Steuersignale nur langsam reagieren. Bei der geschwindigkeitshaltenden Regelung ist es aber erwünscht, daß sie sofort und empfindlich reagieren. Aus diesem Grund wurde das Programm der Steuereinheit 19 in der Weise erstellt, daß eine PD-Regelung verwendet wird. In unserem Fall bedeutet dies, daß das Steuersignal der Steuereinheit 19 aus zwei Teilen besteht. Der eine Teil ist zu der Abweichung zwischen dem in der Speichereinheit 18 gespeicherten Winkelgeschwindigkeitssignal und dem von dem Winkelgeschwindigkeitssignalgeber 16 weitergeleiteten Winkelgeschwindigkeitssignal proportional, während der andere Teil der erste Differentialquotient des ersten Teiles ist, der dem ersten Teil überlagert ist.

Mit der PD-Regelung wird erreicht, daß das die hydrodynamische Verzögerungsbremse 3 regelnde Proportionalventil auf Wirkung des Steuersignals der Steuereinheit 19 schnell öffnet und sich stufenweise auf die im wesentlichen lineare Regelung einstellt.

Schließlich soll bemerkt werden, daß die Steuerung auch mit einem Ausschaltorgan versehen werden kann. Das ist in den Figuren nicht dargestellt, denn - wie bereits erwähnt - erfüllt die Steuereinheit auch andere Aufgaben und ihre manuelle Betätigung ist im Zusammenklang damit ausgebildet. In unserem Fall hat es keine Bedeutung, denn das automatische Ausschalten ist in mehrfacher Weise sichergestellt. Bei in anderer Weise ausgebildeten Steuereinheiten soll aber auch für eine manuelle Ein- und Ausschaltbarkeit der Steuereinheit gesorgt werden.

## Ansprüche

1. Verfahren zum Steuern einer über ein elektrohydraulisches Ventilsystem betätigten hydrodynamischen Verzögerungsbremse (3) eines Kraftfahrzeugs, welches einen aus einem Verbrennungsmotor (1), einem von diesem über eine Kupplung angetriebenen Wechselgetriebe (2), mindestens einem daran unmittelbar oder über eine Kardanwelle (4) angeschlossenem Differentialwerk (5), mindestens einem Paar daran angeschlossener Halbwellen (6) und daran angeordneten Rädern (7) bestehenden Antriebsstrang aufweist, dadurch gekennzeichnet, daß aus der Drehzahl des Bauteils oder aus der durchschnittlichen Drehzahl irgendeines Bauteilpaares des mit der Abtriebswelle des Wechselgetriebes (2) beginnenden und mit den Rädern (7) endenden Teiles des Antriebsstranges mit Hilfe eines Winkelgeschwindigkeitssignalgebers (16) fortlaufend ein elektronisches Winkelgeschwindigkeitssignal erzeugt und in eine Speichereinheit (18) geführt wird und das momentane Winkelgeschwindigkeitssignal mit Hilfe eines durch das "Grundsignal" eines Gaspedalgrundstellungssignalgebers (15) oder durch das Bremssignal eines die verschiedenen Positionen des Bremspedals signalisierenden Bremspedalstellungssignalgebers (14) erzeugten Befehls gespeichert wird, daß mittels des "Grundgassignals" oder des Bremssignals dem elektrohydraulichen Ventilsystem der hydrodynamischen Verzögerungsbremse (3) über eine Steuereinheit (19) ein Steuersignal zugeführt wird, daß das vom Winkelgeschwindigkeitssignalgeber (16) fortlaufend erzeugte Winkelgeschwindigkeitssignal in der Steuereinheit (19) fortlaufend mit dem in der Speichereinheit (18) gespeicherten Winkelgeschwindigkeitssignal verglichen wird, und daß das Steuersignal der Steuereinheit (19) aufgrund einer Abweichung zwischen den beiden Winkelgeschwindigkeitssignalen derart verändert wird, daß der Wert des momentanen Winkelgeschwindigkeitssignals zu dem Wert des gespeicherten Winkelgeschwindigkeitssignals zurückgeführt wird.

2. Verfahren nach Anspruch 1, dadurch gekennzeichnet, daß das Steuersignal der Steuereinheit (19) aus einem zu der Abweichung zwischen den Winkelgeschwindigkeitssignalen proportionalen Teil und einem zu dem ersten Differentialquotienten diese Teiles proportionalen Teil erzeugt wird.

Fig.1

0 291 887

Fig. 2

0 291 887

Fig. 3

0 291 887